(19) Europäisches Patentamt
European Patent Office
Office européen des brevets

(11) EP 4 023 776 A1

(12) EUROPEAN PATENT APPLICATION
published in accordance with Art. 153(4) EPC

(43) Date of publication:
06.07.2022 Bulletin 2022/27

(51) International Patent Classification (IPC):
C21D 6/00 (2006.01)     C21D 8/02 (2006.01)
C22C 38/00 (2006.01)     C22C 38/54 (2006.01)

(21) Application number: 20856550.7

(52) Cooperative Patent Classification (CPC):
C21D 6/00; C21D 8/02; C22C 38/00; C22C 38/54;
Y02P 10/20

(22) Date of filing: 30.07.2020

(86) International application number:
PCT/JP2020/029240

(87) International publication number:
WO 2021/039266 (04.03.2021 Gazette 2021/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.08.2019 JP 2019156592

(71) Applicant: NIPPON STEEL CORPORATION
Chiyoda-ku
Tokyo 100-8071 (JP)

(72) Inventors:
• HIRATA, Hiroyuki
  Tokyo 100-8071 (JP)
• YOSHIZAWA, Mitsuru
  Tokyo 100-8071 (JP)
• HIGUCHI, Junichi
  Tokyo 100-8071 (JP)
• TANAKA, Katsuki
  Tokyo 100-8071 (JP)

(74) Representative: Zimmermann & Partner
Patentanwälte mbB
Postfach 330 920
80069 München (DE)

(54) AUSTENITIC HEAT-RESISTANT STEEL

(57) An austenitic heat resisting steel includes, as a chemical composition, by mass%: C: 0.04% to 0.12%; Si: 0.10% to 0.30%; Mn: 0.20% to 0.80%; P: 0% to 0.030%; S: 0.0001% to 0.0020%; Sn: 0.0005% to 0.0230%; Cu: 2.3% to 3.8%; Co: 0.90% to 2.40%; Ni: 22.0% to 28.0%; Cr: 20.0% to 25.0%; Mo: 0.01% to 0.40%; W: 2.8% to 4.2%; Nb: 0.20% to 0.80%; B: 0.0010% to 0.0050%; and N: 0.16% to 0.30%, and a remainder of Fe and impurities, optionally further includes one or more selected from Al, O, V, Ti, Ta, C, Mg, and REM, in which $0.0012\% \leq [\%S] + [\%Sn] \leq 2.5 \times [\%B] + 0.0125\%$ is satisfied.

FIG. 1

EP 4 023 776 A1

**Description**

[Technical Field of the Invention]

The present invention relates to an austenitic heat resisting steel.
Priority is claimed on Japanese Patent Application No. 2019-156592, filed on August 29, 2019, the content of which is incorporated herein by reference.

[Background Art]

Recently, from the viewpoint of reducing the environmental burden, an increase in temperature and pressure of operating conditions in a power plant boiler has progressed on a global scale, and a material used in a superheater tube or a reheater tube is required to have excellent high temperature strength and higher corrosion resistance.
As a material that satisfies these requirements, various austenitic heat resisting steels including large amounts of N and Ni to improve high temperature strength and including more than 20% of Cr to improve corrosion resistance and steam oxidation resistance at a high temperature, are disclosed.
For example, Patent Document 1 discloses a heat resistant austenitic stainless steel including 20% to 27% of Cr, 22.5% to 32% of Ni, and 0.1 % to 0.3% of N to improve high temperature strength, steam oxidation resistance, fire side corrosion resistance, and structural stability.
Patent Document 2 discloses an austenitic stainless steel having excellent high temperature strength and creep ductility, the austenitic stainless steel including more than 22% and less than 30% of Cr, more than 18% and less than 25% of Ni, and 0.1% to 0.35% of N.
Patent Document 3 discloses an austenitic heat resisting steel having excellent high temperature strength and workability after long-term use by including more than 22% and less than 30% of Cr, more than 18% and less than 25% of Ni, and 0.1% to 0.35% of N and reducing the amounts of impurity elements such as Sn or Sb.
Patent Document 4 discloses an austenitic stainless steel having excellent high temperature strength and embrittlement cracking resistance of a weld part during long-term use by including 15% to 30% of Cr, 6% to 30% of Ni, and 0.03% to 0.35% of N and reducing the amounts of impurity elements such as P, S, or Sn.
Incidentally, the power plant boiler needs to be regularly stopped to check soundness. At this time, the temperature of a member such as a tube to be used decreases. The austenitic stainless steel and the heat resisting steel have excellent high temperature strength and excellent performance for each of the objects to be achieved. However, it was found that, when welding workability is not sufficient and/or the temperature after long-term use at a high temperature decreases, there may be a case where sufficient toughness cannot be stably obtained.

[Prior Art Document]

[Patent Document]

[Patent Document 1] Published Japanese Translation No. 2002-537486 of the PCT International Publication
[Patent Document 2] Japanese Unexamined Patent Application, First Publication No. 2004-250783
[Patent Document 3] Japanese Unexamined Patent Application, First Publication No. 2009-84606
[Patent Document 4] PCT International Publication No. WO2009/044796

The present invention has been made in consideration of the above-described circumstances. An object of the present invention is to provide an austenitic heat resisting steel capable of obtaining excellent welding workability and obtaining excellent creep strength and stable toughness after long-term holding at a high temperature at the same time.

[Disclosure of the Invention]

[Problems to be Solved by the Invention]

In order to solve the above-described problems, the present inventors conducted a detailed investigation on toughness after long-term holding (heating) at a high temperature regarding an austenitic heat resisting steel including 20.0% to 25.0% of Cr, 22.0% to 28.0% of Ni, 0.90% to 2.40% of Co, and 0.16% to 0.30% of N from the viewpoint of creep strength and essentially including S: 0.0001% to 0.0020% and Sn: 0.0005% to 0.0230% from the viewpoint of welding workability (back bead formability during root pass welding). As a result, the following findings were clarified.

(a) The toughness of the steel after long-term holding at a high temperature deteriorates significantly as the S content and the Sn content increase. As a result of fracture surface observation after the impact test, as S content and the Sn content increased, the proportion of a fractured region in an austenite grain boundary increased, and S and Sn were detected on the fracture surface. Based on this result, the reason why the toughness of the steel including S and Sn decreased after long-term holding at a high temperature is presumed to be that S and Sn in the steel segregate in an austenite grain boundary during long-term holding at a high temperature and these elements causes a decrease in grain boundary binding force.

(b) On the other hand, as a result of the investigation by the present inventors, in order to secure the toughness after long-term holding at a high temperature, it is effective to reduce S and Sn as far as possible without deterioration in welding workability and to include B in an appropriate depending on the total content of S and Sn. The reason for this is presumed to be that B in the steel has a fast diffusion rate and segregates in an austenite grain boundary faster than S and Sn during long-term holding at a high temperature. As a result, B suppresses deterioration in grain boundary binding force caused by S and Sn and reduces deterioration in toughness.

[Means for Solving the Problem]

The present invention has been completed based on the above-described findings, and the summary thereof is an austenitic heat resisting steel shown below.

(1) According to one aspect of the present invention, there is provided an austenitic heat resisting steel including, as a chemical composition, by mass%:

C: 0.04% to 0.12%;
Si: 0.10% to 0.30%;
Mn: 0.20% to 0.80%;
P: 0% to 0.030%;
S: 0.0001% to 0.0020%;
Sn: 0.0005% to 0.0230%;
Cu: 2.3% to 3.8%;
Co: 0.90% to 2.40%;
Ni: 22.0% to 28.0%;
Cr: 20.0% to 25.0%;
Mo: 0.01% to 0.40%;
W: 2.8% to 4.2%;
Nb: 0.20% to 0.80%;
B: 0.0010% to 0.0050%;
N: 0.16% to 0.30%;
Al: 0% to 0.030%;
O: 0% to 0.030%;
V: 0% to 0.08%;
Ti: 0% to 0.08%; Ta: 0% to 0.08%;
Ca: 0% to 0.010%;
Mg: 0% to 0.010%;
REM: 0% to 0.080%; and
a remainder of Fe and impurities, in which Expression (i) is satisfied.

$$0.0012\% \leq [\%S] + [\%Sn] \leq 2.5 \times [\%B] + 0.0125\% \quad (i)$$

Here, [%S], [%Sn], and [%B] in Expression (i) represent an S content, an Sn content, and a B content by mass%, respectively.

(2) In the austenitic heat resisting steel according to (1), the chemical composition may include one or more selected from the group consisting of:

V: 0.01% to 0.08%;
Ti: 0.01% to 0.08%;
Ta: 0.01% to 0.08%;

Ca: 0.001% to 0.010%;
Mg: 0.001% to 0.010%; and
REM: 0.0005% to 0.080%.

[Effects of the Invention]

According to the aspects of the present invention, it is possible to provide an austenitic heat resisting steel capable of obtaining excellent welding workability and obtaining stable toughness after long-term (for example, at 450°C to 800°C 500 hours or longer) holding at a high temperature and excellent creep strength at the same time. The austenitic heat resisting steel according to the aspect of the present invention is suitable for a device used at a high temperature for a long period of time, for example, a boiler tube in a coal fired power plant, a petroleum fired power plant, a garbage burning power plant, a biomass power plant, a cracking tube in a petrochemical plant, or the like.

[Brief Description of the Drawings]

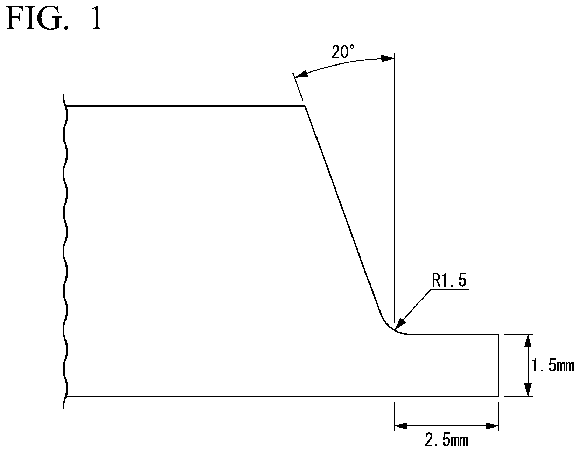

FIG. 1 is a diagram showing a groove shape during a weld test.

[Embodiments of the Invention]

Hereinafter, an austenitic heat resisting steel according to one embodiment of the present invention (austenitic heat resisting steel according to the embodiment) will be described. The austenitic heat resisting steel according to the embodiment is steel conforming to austenitic stainless steel or austenitic heat resisting steel described in, for example, JIS G 0203:2009.

<Chemical Composition>

The austenitic heat resisting steel according to the embodiment has a predetermined chemical composition. The reason for limiting the chemical composition is as follows.
In the following description, the expression "%" of the content of each element represents "mass%". In addition, in the present specification, unless specified otherwise, a numerical range represented using "to" refers to a range including numerical values before and after "to" as a lower limit and an upper limit.

C: 0.04% to 0.12%

C is an element that stabilizes the austenite structure, binds to Cr to form a carbide, and improves the creep strength at a high temperature. In order to obtain this effect sufficiently, the C content needs to be 0.04% or more. The C content is preferably 0.05% or more and more preferably 0.06% or more.
On the other hand, when the C content is excessively large, a large amount of the carbide precipitates such that toughness deteriorates. Therefore, the C content is set to be 0.12% or less. The C content is preferably 0.11% or less and more preferably 0.10% or less.

Si: 0.10% to 0.30%

Si is an element that has the deoxidation effect and is necessary for securing corrosion resistance and oxidation resistance at a high temperature. In order to obtain these effects, the Si content needs to be 0.10% or more. The Si content is preferably 0.12% or more and more preferably 0.15% or more.
On the other hand, when the Si content is excessively large, the stability of the austenite structure deteriorates, and the creep strength decreases. Therefore, the Si content is set to be 0.30% or less. The Si content is preferably 0.28% or less and more preferably 0.25% or less.

Mn: 0.20% to 0.80%

As in Si, Mn is an element having the deoxidation effect. In addition, Mn is an element that stabilizes the austenite structure and contributes to the improvement of the creep strength. In order to obtain these effects, the Mn content needs to be 0.20% or more. The Mn content is preferably 0.25% or more and more preferably 0.30% or more.
On the other hand, when the Mn content is excessively large, the creep ductility deteriorates. Therefore, the Mn content is set to be 0.80% or less. The Mn content is preferably 0.75% or less and more preferably 0.70% or less.

P: 0% to 0.030%

P is an element that is included as an impurity and increases liquation cracking susceptibility during welding. Further, when a large amount of P is included, the creep ductility also deteriorates. Therefore, the upper limit is provided for the P content, and the P content is set to be 0.030% or less. The P content is preferably 0.028% or less and more preferably 0.025% or less. It is preferable that the P content is as small as possible. That is, the P content may be 0%. However, an excessive decrease in P content causes an increase in steelmaking cost. Therefore, the lower limit of the P content is preferably 0.001% and more preferably 0.002%.

S: 0.0001% to 0.0020%

S is an element that segregates in an austenite grain boundary during holding at a high temperature and weakens the binding force of the austenite grain boundary. Therefore, when the S content is large, the toughness of the heat resisting steel after long-term holding at a high temperature deteriorates. In order to prevent a decrease in toughness in the content ranges of the other elements in the austenitic heat resisting steel according to the embodiment, the S content needs to be 0.0020% or less and needs to satisfy a relationship with the Sn content and the B content described below. The S content is preferably 0.0018% or less and more preferably 0.0015% or less. From the viewpoint of toughness, it is preferable that the S content is as small as possible. However, S is an element that affects the melt flow of the molten pool during welding, increases the weld penetration depth, and improves welding workability, in particular, root bead formability during root pass welding. Therefore, the S content needs to be 0.0001% or more and needs to satisfy a relationship with Sn described below. The S content is preferably 0.0002% or more and more preferably 0.0003% or more.

Sn: 0.0005% to 0.0230%

Sn is an element that evaporates from the molten pool during welding, contributes to the formation of an energizing path of an arc, and increases the weld penetration depth to improve welding workability. In order to obtain this effect, in the content ranges of the other elements in the austenitic heat resisting steel according to the embodiment, the Sn content needs to be 0.0005% or more and needs to satisfy a relationship with the S content described below. The Sn content is preferably 0.0010% or more and more preferably 0.0015% or more.
On the other hand, when the Sn content is excessively large, Sn segregates in an austenite grain boundary during holding at a high temperature and weakens the binding force of the grain boundary. As a result, the toughness of the steel after long-term holding at a high temperature deteriorates. Therefore, in the content ranges of the other elements in the austenitic heat resisting steel according to the embodiment, the Sn content needs to be 0.0230% or less and needs to satisfy a relationship with the S content and B content described below. The Sn content is preferably 0.0220% or less and more preferably 0.0200% or less.

Cu: 2.3% to 3.8%

Cu is an element that improves the stability of the austenite structure, finely precipitates when being held at a high temperature, and contributes to the improvement of the creep strength. In order to obtain this effect sufficiently, the Cu content needs to be 2.3% or more. The Cu content is preferably 2.5% or more and more preferably 2.7% or more.
On the other hand, when the C content is excessively large, hot workability deteriorates. Therefore, the Cu content is set to be 3.8% or less. The Cu content is preferably 3.5% or less and more preferably 3.3% or less.

Co: 0.90% to 2.40%

Co is an element that improves the stability of the austenite structure and contributes to the improvement of the creep strength. In order to obtain this effect sufficiently, the Co content needs to be 0.90% or more. The Co content is preferably 1.00% or more, more preferably 1.20% or more, and still more preferably 1.40% or more.
On the other hand, when the Co content is excessively large, the effect is saturated, and the costs increase because Co is a very expensive element. Therefore, the Co content is set to be 2.40% or less. The Co content is preferably 2.20% or less and more preferably 2.00% or less.

Ni: 22.0% to 28.0%

Ni is an element that improves the stability of the austenite structure and contributes to the improvement of the creep strength. In order to obtain this effect sufficiently, the Ni content needs to be 22.0% or more. The Ni content is preferably 22.2% or more and more preferably 22.5% or more.

On the other hand, Ni is a very expensive element. Therefore, when the Ni content is excessively large, the effect is saturated, and the costs increase. Therefore, the Ni content is set to be 28.0% or less. The Ni content is preferably 27.8% or less and more preferably 27.5% or less.

Cr: 20.0% to 25.0%

Cr is an element that is effective for securing oxidation resistance and corrosion resistance at a high temperature. In addition, Cr is an element that forms a fine carbide and contributes to the improvement of the creep strength. In order to obtain these effects sufficiently, the Cr content needs to be 20.0% or more. The Cr content is preferably 20.5% or more and more preferably 21.0% or more.

On the other hand, when the Cr content is excessively large, the stability of the austenite structure deteriorates, and the creep strength decreases. Therefore, the Cr content is set to be 25.0% or less. The Cr content is preferably 24.5% or less and more preferably 24.0% or less.

Mo: 0.01% to 0.40%

Mo is an element that is solid-solubilized in the steel and contributes to the improvement of the creep strength or the tensile strength at a high temperature. In order to obtain this effect sufficiently, the Mo content needs to be 0.01 % or more. The Mo content is preferably 0.02% or more and more preferably 0.03% or more.

On the other hand, when the Mo content is excessively large, the stability of the austenite structure significantly deteriorates, and the creep strength decreases. Further, since Mo is an expensive element, an excessive increase in the Mo content causes an increase in costs. Therefore, the Mo content is set to be 0.40% or less. The Mo content is preferably 0.38% or less and more preferably 0.35% or less.

W: 2.8% to 4.2%

W is an element that is solid-solubilized in the steel and contributes to the improvement of the creep strength or the tensile strength at a high temperature. In order to obtain this effect sufficiently, the W content needs to be 2.8% or more. The W content is preferably 3.0% or more and more preferably 3.2% or more.

On the other hand, when the W content is excessively large, the stability of the austenite structure deteriorates, and the creep strength decreases. Therefore, the W content is set to be 4.2% or less. The W content is preferably 4.0% or less and more preferably 3.8% or less.

Nb: 0.20% to 0.80%

Nb is an element that precipitates in austenite grains as a fine carbide or nitride and contributes to the improvement of the creep strength or the tensile strength at a high temperature. In order to obtain this effect sufficiently, the Nb content needs to be 0.20% or more. The Nb content is preferably 0.25% or more and more preferably 0.30% or more.

On the other hand, when the Nb content is excessively large, a large amount of the carbonitride precipitates such that creep ductility deteriorates. Therefore, the Nb content is 0.80% or less. The Nb content is preferably 0.75% or less and more preferably 0.70% or less.

B: 0.0010% to 0.0050%

B is an element that finely disperses a grain boundary carbide to improve the creep strength, segregates in a grain boundary when being held at a high temperature, and suppresses boundary segregation of S and Sn to contribute to the improvement of the toughness of the steel after being held at a high temperature. In order to obtain these effects sufficiently, the B content needs to be 0.0010% or more and needs to satisfy a relationship with the S content and the Sn content described below. The B content is preferably 0.0012% or more and more preferably 0.0015% or more.

On the other hand, when the B content is excessively large, the cracking susceptibility of a heat affected zone during welding increases. Therefore, the B content is set to be 0.0050% or less. The B content is preferably 0.0048% or less and more preferably 0.0045% or less.

N: 0.16% to 0.30%

N is an element that stabilizes the austenite structure, is solid-solubilized in the steel or precipitates as a nitride, and contributes to the improvement of high temperature strength. In order to obtain this effect sufficiently, the N content needs to be 0.16% or more. The N content is preferably 0.18% or more and more preferably 0.20% or more.

On the other hand, when the N content is excessively large, ductility deteriorates. Therefore, the N content is set to be 0.30% or less. The N content is preferably 0.28% or less and more preferably 0.26% or less.

Al: 0% to 0.030%

Al is an element that is added as a deoxidizing agent. However, when the Al content is excessively large, the cleanliness of the steel deteriorates, and hot workability deteriorates. Therefore, the Al content needs to be 0.030% or less. The Al content is preferably 0.025% or less and more preferably 0.020% or less. The lower limit does not need to be particularly provided. That is, the Al content may be 0%. However, an excessive decrease in Al content causes an increase in manufacturing costs. Therefore, the Al content is preferably 0.001 % or more and more preferably 0.002% or more.

O: 0% to 0.030%

Oxygen (O) is an element that is included as an impurity. When the O content is excessively large, hot workability deteriorates, and ductility deteriorates. Therefore, the O content needs to be 0.030% or less. The O content is preferably 0.025% or less and more preferably 0.020% or less. The lower limit does not need to be particularly provided. That is, the O content may be 0%. However, an excessive decrease in O content causes an increase in manufacturing costs. Therefore, the O content is preferably 0.001% or more and more preferably 0.002% or more.

$$0.0012\% \leq [\%S] + [\%Sn] \leq 2.5 \times [\%B] + 0.0125\% \quad (1)$$

In the austenitic heat resisting steel according to the embodiment, in a state where the content of each of the elements is controlled as described above, the S content, the Sn content, and the B content further need to satisfy Expression (1).

Here, [%S], [%Sn], and [%B] in Expression (1) represent an S content, an Sn content, and a B content by mass%, respectively.

S and Sn are elements that segregate in an austenite grain boundary during holding at a high temperature and weaken the binding force of the austenite grain boundary. Therefore, in general, in steel including S and Sn, the toughness after long-term holding at a high temperature deteriorates. However, as can be seen by the present inventors, B has a fast diffusion rate and segregates in an austenite grain boundary faster than S and Sn. As a result, B suppresses deterioration in toughness caused by segregation of S and Sn in a grain boundary. In order to obtain this effect sufficiently, the total content of S and Sn needs to be 2.5 × [%B] + 0.0125% or less with respect to the B content.

On the other hand, as each of the S content and the Sn content decreases, each of S and Sn is advantageous in improving toughness after holding at a high temperature but has an effect of improving welding workability (in particular, root bead formability during root pass welding) by affecting convection of the molten pool during welding and an arc phenomenon to increase the weld penetration depth. In the austenitic heat resisting steel according to the embodiment, in order to obtain this effect, the total content of S and Sn needs to be 0.0012% or more. The total content of S and Sn is preferably 0.0015% or more and more preferably 0.0018% or more.

Basically, the austenitic heat resisting steel according to the embodiment includes the above-described elements and a remainder consisting of Fe and impurities. However, in addition to the above-described elements, the austenitic heat resisting steel may include at least one element selected from the following group instead of a part of Fe as an alloy component. Since these elements do not need to be included, the lower limits thereof are 0%. Hereinafter, the reason for the limitation will be described.

V: 0% to 0.08%

V is an element that binds to carbon (C) or nitrogen (N) to form a fine carbide or carbonitride and contributes to the improvement of the creep strength. Therefore, V may be optionally included. In order to obtain this effect, the V content is preferably 0.01% or more and more preferably 0.02% or more.

However, when the V content is excessively large, a large amount of the carbonitride precipitates such that creep ductility deteriorates. Therefore, even when V is included, the V content needs to be 0.08% or less. The V content is preferably 0.07% or less and more preferably 0.06% or less. The V content is still more preferably 0.04% or less.

Ti: 0% to 0.08%

As in V, Ti is an element that binds to carbon or nitrogen to form a fine carbide or carbonitride and contributes to the improvement of the creep strength. Therefore, Ti may be optionally included. In order to obtain this effect, the Ti content is preferably 0.01% or more and more preferably 0.02% or more.

However, when the Ti content is excessively large, a large amount of the carbonitride precipitates such that creep ductility deteriorates. Therefore, even when Ti is included, the Ti content needs to be 0.08% or less. The Ti content is preferably 0.07% or less and more preferably 0.06% or less.

Ta: 0% to 0.08%

As in V and Ti, Ta is an element that binds to carbon or nitrogen to form a fine carbide or carbonitride and contributes to the improvement of the creep strength. Therefore, Ta may be optionally included. In order to obtain this effect, the Ta content is preferably 0.01% or more and more preferably 0.02% or more.

However, when the Ta content is excessively large, a large amount of the carbonitride precipitates such that creep ductility deteriorates. Therefore, even when Ta is included, the Ta content needs to be 0.08% or less. The Ta content is preferably 0.07% or less and more preferably 0.06% or less.

Ca: 0% to 0.010%

Ca is an element that has an effect of improving hot workability during manufacturing. Therefore, Ca may be optionally included. In order to obtain this effect, the Ca content is preferably 0.001% or more and more preferably 0.002% or more.

However, when the Ca content is excessively large, Ca binds to oxygen (O) and significantly deteriorates cleanliness such that hot workability rather deteriorates. Therefore, when Ca is included, the Ca content is set to be 0.010% or less. The Ca content is preferably 0.008% or less and more preferably 0.006% or less.

Mg: 0% to 0.010%

As in Ca, Mg is an element that has an effect of improving hot workability during manufacturing. Therefore, Mg may be optionally included. In order to obtain this effect, the Mg content is preferably 0.001 % or more and more preferably 0.002% or more.

However, when the Mg content is excessively large, Mg binds to oxygen (O) and significantly deteriorates cleanliness such that hot workability rather deteriorates. Therefore, even when Mg is included, the Mg content is 0.010% or less. The Mg content is preferably 0.008% or less and more preferably 0.006% or less.

REM: 0% to 0.080%

As in Ca or Mg, REM is an element that has an effect of improving hot workability during manufacturing. Therefore, REM may be optionally included. In order to obtain this effect, the REM content is preferably 0.0005% or more and more preferably 0.001% or more.

However, when the REM content is excessively large, REM binds to oxygen and significantly deteriorates cleanliness such that hot workability rather deteriorates. Therefore, even when REM is included, the REM content is 0.080% or less. The REM content is preferably 0.060% or less and more preferably 0.050% or less.

"REM" is a general term for 17 elements in total including Sc, Y, and lanthanoids, and the REM content refers to the total content of one element or two or more elements among REM. In addition, REM is generally included in mischmetal. Therefore, for example, REM may be added in the form of mischmetal such that the REM content is in the above-described range.

[Manufacturing Method]

The austenitic heat resisting steel according to the embodiment is obtained by performing, for example, a solution treatment (solution heat treatment) of casting molten steel having the above-described predetermined chemical composition to obtain a cast piece, performing hot forging and subsequently hot working and optionally performing cold working on the cast piece to form the cast piece in a predetermined shape, holding the cast piece at 1050°C to 1280°C for 2 minutes to 60 minutes, and water-cooling the cast piece. Working conditions of hot forging, hot working, cold working, and the like are not particularly limited and may be appropriately determined depending on the shape.

The austenitic heat resisting steel according to the embodiment is used for a device used at a high temperature, for example, a power plant boiler. Examples of the device used at a high temperature include a boiler tube in a coal fired power plant, a petroleum fired power plant, a garbage burning power plant, a biomass power plant, or the like and a cracking tube in a petrochemical plant.

Here, examples of "use at a high temperature" include an aspect of use in an environment of 450°C or higher and 800°C or lower (further 500°C or higher and 750°C or lower).

[Examples]

Hereinafter, the present invention will be described in detail based on Examples, but the present invention is not limited to Examples.

Each of materials represented by symbols A to N having chemical compositions shown in Tables 1A and 1B (the remainder consists of Fe and impurities: the unit is mass%) was melted and cast to obtain an ingot, and hot forging and hot rolling were performed on the ingot to form the ingot in a sheet shape having a thickness of 18 mm.

This sheet-shaped material was heated at 11 80°C, was held at this temperature for 30 minutes, and was water-cooled for a solution treatment. As a result, austenitic heat resisting steels (No.1 to 14) were obtained.

[Table 1A]

| Symbol | C | Si | Mn | P | S | Sn | Cu | Co | Ni | Cr | Mo |
|--------|------|------|------|-------|--------|--------|-----|------|------|------|------|
| A | 0.10 | 0.19 | 0.55 | 0.015 | 0.0005 | 0.0010 | 2.7 | 1.40 | 23.5 | 22.5 | 0.10 |
| B | 0.08 | 0.15 | 0.50 | 0.018 | 0.0003 | 0.0010 | 2.5 | 1.50 | 25.0 | 22.8 | 0.30 |
| C | 0.06 | 0.25 | 0.31 | 0.020 | 0.0012 | 0.0140 | 3.2 | 2.00 | 23.9 | 21.0 | 0.03 |
| D | 0.11 | 0.20 | 0.68 | 0.025 | 0.0014 | 0.0170 | 3.4 | 1.80 | 27.4 | 24.0 | 0.35 |
| E | 0.07 | 0.12 | 0.48 | 0.018 | 0.0006 | 0.0190 | 3.0 | 1.60 | 24.8 | 23.2 | 0.28 |
| F | 0.12 | 0.21 | 0.52 | 0.024 | 0.0018 | 0.0170 | 2.4 | 1.20 | 22.2 | 24.5 | 0.40 |
| G | 0.11 | 0.22 | 0.60 | 0.028 | 0.0015 | 0.0180 | 2.3 | 1.00 | 22.0 | 24.3 | 0.35 |
| H | 0.11 | 0.20 | 0.45 | 0.023 | 0.0013 | 0.0220 | 2.4 | 0.80 | 22.1 | 24.6 | 0.38 |
| I | 0.12 | 0.19 | 0.41 | 0.022 | 0.0024 | 0.0020 | 2.5 | 1.10 | 22.5 | 24.8 | 0.34 |
| J | 0.10 | 0.18 | 0.39 | 0.020 | 0.0003 | 0.0240 | 2.4 | 0.90 | 22.3 | 24.5 | 0.30 |
| K | 0.06 | 0.21 | 0.42 | 0.018 | 0.0001 | 0.0010 | 3.0 | 1.50 | 23.5 | 22.6 | 0.07 |
| L | 0.05 | 0.28 | 0.25 | 0.027 | 0.0014 | 0.0130 | 2.4 | 0.60 | 22.2 | 24.7 | 0.37 |
| M | 0.11 | 0.16 | 0.51 | 0.017 | 0.0007 | 0.0050 | 2.6 | 1.03 | 25.1 | 22.7 | 0.15 |
| N | 0.10 | 0.18 | 0.50 | 0.018 | 0.0006 | 0.0060 | 2.7 | 0.91 | 25.5 | 22.5 | 0.12 |

[Table 1B]

| Symbol | W | Nb | B | N | Al | O | V | Ti | Ta | Ca | Mg | REM |
|--------|-----|------|--------|------|-------|-------|------|------|------|-------|-----|-------|
| A | 3.2 | 0.45 | 0.0035 | 0.20 | 0.004 | 0.008 | | | | | | |
| B | 3.5 | 0.30 | 0.0015 | 0.25 | 0.002 | 0.009 | | 0.04 | | 0.002 | | |
| C | 3.0 | 0.69 | 0.0013 | 0.21 | 0.008 | 0.008 | | | | | | |
| D | 3.8 | 0.26 | 0.0026 | 0.26 | 0.010 | 0.007 | | | 0.05 | 0.003 | | |
| E | 3.2 | 0.51 | 0.0031 | 0.18 | 0.005 | 0.009 | 0.03 | | | | | 0.045 |
| F | 3.6 | 0.75 | 0.0023 | 0.26 | 0.007 | 0.014 | | | | | | |
| G | 3.5 | 0.68 | 0.0026 | 0.28 | 0.008 | 0.015 | | | | | | |
| H | 3.7 | 0.65 | 0.0041 | 0.27 | 0.006 | 0.012 | | | 0.06 | | | 0.075 |
| I | 3.7 | 0.65 | 0.0012 | 0.27 | 0.006 | 0.012 | 0.05 | 0.07 | | | | |
| J | 3.6 | 0.70 | 0.0049 | 0.25 | 0.005 | 0.012 | | | | | | |
| K | 2.9 | 0.35 | 0.0020 | 0.22 | 0.005 | 0.008 | | | | | | |
| L | 3.7 | 0.31 | 0.0011 | 0.18 | 0.006 | 0.008 | | | | 0.002 | | |
| M | 3.1 | 0.38 | 0.0025 | 0.25 | 0.007 | 0.010 | | | | | | |
| N | 3.0 | 0.35 | 0.0020 | 0.26 | 0.005 | 0.009 | | | | | | |

[Charpy Impact Test/Evaluation of Toughness]

Front and back surfaces were ground by machining from the austenitic heat resisting steel after the solution treatment, and a plurality of sheet materials (base metals for the impact test) having a sheet thickness of 15 mm, a width of 150 mm, and a length of 150 mm were collected. In addition, an aging heat treatment was performed on some of the base metals for the impact test at 700°C for 1000 hours.

Next, regarding each of the base metal for the impact test on which the aging heat treatment was not performed and the base metal for the impact test on which the aging heat treatment was performed, three 2 mm V-notch full size Charpy impact test pieces obtained by processing a notch were collected from a center portion in the sheet thickness direction and were provided for the Charpy impact test.

The Charpy impact test was performed according to JIS Z 2242:2005. The test was performed at 20°C, cases where the average value of absorbed energy of the three test pieces was 27 J or higher were evaluated as "Pass", in which cases where all the individual values of absorbed energy of the three test pieces were 27 J or higher were evaluated as "Excellent" and the other cases were evaluated as "Favorable", among evaluated as "Pass". On the other hand, cases where the average value of absorbed energy of the three test pieces was lower than 27 J was evaluated as "Fail".

[Weld Test/Evaluation of Welding Workability]

In addition, front and back surfaces were ground by machining from the austenitic heat resisting steel after the solution treatment, and a sheet material (base metals for a weld test) having a sheet thickness of 15 mm, a width of 50 mm, and a length of 100 mm was collected. The base metal for the weld test underwent groove working shown in FIG. 1 in the longitudinal direction, and edges were made abut against each other. Root pass welding was performed under "absence of a filler material" and "presence of a filler material" by automatic gas tungsten arc welding where Ar was used as shielding gas.

During welding in the absence of the filler material, the heat input was set to 6 kJ/cm. During welding in the presence of the filler material, JIS-Z3334 (2011) SNi6617 having an outer diameter of 1.2 mm was used as the filler material, the heat input was set to 9 kJ/cm, and butt welding was performed.

Cases where a back bead was formed over the entire length of the weld line of the obtained weld joint were evaluated as "Pass" for the welding workability, in which cases where the width of the back bead over the entire length of the weld line was 2mm or more were evaluated as "Excellent" and cases where a back bead having a width of less than 2 mm and 1mm or more was formed were evaluated as "Favorable". Cases where a back bead was not formed in a part of two joints or a portion having a bead width of less than 1 mm was partially formed was determined as "Fail" for the welding workability.

[Creep Rupture Test/Evaluation of Creep Strength]

Further, regarding the austenitic heat resisting steel evaluated as "Pass" in the impact test and the weld test, a round bar creep test piece was collected from the base metal for the impact test on which the aging heat treatment was not performed, and the creep rupture test was performed. At this time, the creep rupture test was performed under a condition of 700°C × 167 MPa such that the target rupture time of the base metal was 1000 hours. The creep rupture test was performed according to JIS Z 2271:2010.

Cases where the rupture time exceeded the target rupture time (1000 hours) were evaluated as "Pass", and cases where the rupture time was shorter than the target rupture time (1000 hours) were evaluated as "Fail".

[Table 2]

| No. | Used Material | S+Sn (mass%) | 2.5×[%B]+0.0125 | Charpy Impact Test Result | | Weld Test | | Creep Rupture Test Result |
|---|---|---|---|---|---|---|---|---|
| | | | | No Aging Heat Treatment | Aging Heat Treatment | Absence of Filler Material | Presence of Filler Material | |
| 1 | A | 0.0015 | 0.0213 | Pass (Excellent) | Pass (Excellent) | Pass (Excellent) | Pass (Excellent) | Pass |
| 2 | B | 0.0013 | 0.0163 | Pass (Excellent) | Pass (Excellent) | Pass (Favorable) | Pass (Favorable) | Pass |
| 3 | C | 0.0152 | 0.0158 | Pass (Excellent) | Pass (Favorable) | Pass (Excellent) | Pass (Excellent) | Pass |
| 4 | D | 0.0184 | 0.0190 | Pass (Excellent) | Pass (Excellent) | Pass (Excellent) | Pass (Excellent) | Pass |
| 5 | E | 0.0196 | 0.0203 | Pass (Excellent) | Pass (Excellent) | Pass (Excellent) | Pass (Excellent) | Pass |
| 6 | F | 0.0188 | 0.0183 | Pass (Excellent) | Fail | Pass (Excellent) | Pass (Excellent) | Not Performed |
| 7 | G | 0.0195 | 0.0190 | Pass (Excellent) | Fail | Pass (Excellent) | Pass (Excellent) | Not Performed |
| 8 | H | 0.0233 | 0.0228 | Pass (Excellent) | Fail | Pass (Excellent) | Pass (Excellent) | Not Performed |
| 9 | I | 0.0044 | 0.0155 | Pass (Excellent) | Fail | Pass (Excellent) | Pass (Excellent) | Not Performed |
| 10 | J | 0.0243 | 0.0248 | Pass (Excellent) | Fail | Pass (Excellent) | Pass (Excellent) | Not Performed |
| 11 | K | 0.0011 | 0.0175 | Pass (Excellent) | Pass (Excellent) | Fail | Fail | Not Performed |
| 12 | L | 0.0144 | 0.0153 | Pass (Excellent) | Pass (Favorable) | Pass (Excellent) | Pass (Excellent) | Fail |
| 13 | M | 0.0057 | 0.0188 | Pass (Excellent) | Pass (Excellent) | Pass (Excellent) | Pass (Excellent) | Pass |
| 14 | N | 0.0066 | 0.0175 | Pass (Excellent) | Pass (Excellent) | Pass (Excellent) | Pass (Excellent) | Pass |

It can be seen from Table 2 that No. 1 to 5, 13, and 14 manufactured using the symbols A to E, M, and N satisfying the conditions defined by the present invention were toughness after long-term holding at a high temperature was stably excellent, and the welding workability and the creep strength were also high.

On the other hand, in No. 6 to 8 manufactured using the symbols F to H, the total content of S and Sn exceeded a range of a relational expression with the B content defined by the present invention. Therefore, the effect of suppressing a decrease in grain boundary binding force caused by boundary segregation S and Sn by B was not sufficiently obtained.

As a result, toughness after the aging heat treatment (high temperature long-term holding) did not satisfy the target.

In No. 9 and 10 manufactured using the symbols I and J, each of the S content and the Sn content exceeded the upper limit. Therefore, a decrease in grain boundary binding force caused by the boundary segregation of these elements was significant. As a result, toughness after the aging heat treatment (high temperature long-term holding) did not satisfy the target.

In addition, in No. 11 manufactured using the symbol K, the total content of S and Sn was lower than the range defined by the present invention. As a result, the effect of improving the root bead formability by these elements was not obtained, and the welding workability was poor.

In No. 12 manufactured using the symbol L, the Co content was lower than the range defined by the present invention. As a result, the effect of sufficiently improving the creep strength was not obtained.

As described above, it can be seen that, only when the requirements of the present invention are satisfied, excellent toughness can be stably obtained after long-term holding without deterioration in welding workability, and a sufficient creep strength can also be obtained.

[Industrial Applicability]

According to the present invention, it is possible to provide an austenitic heat resisting steel capable of obtaining excellent welding workability and obtaining stable toughness after long-term holding at a high temperature and excellent creep strength at the same time.

**Claims**

1. An austenitic heat resisting steel comprising, as a chemical composition, by mass%:

   C: 0.04% to 0.12%;
   Si: 0.10% to 0.30%;
   Mn: 0.20% to 0.80%;
   P: 0% to 0.030%;
   S: 0.0001% to 0.0020%;
   Sn: 0.0005% to 0.0230%;
   Cu: 2.3% to 3.8%;
   Co: 0.90% to 2.40%;
   Ni: 22.0% to 28.0%;
   Cr: 20.0% to 25.0%;
   Mo: 0.01% to 0.40%;
   W: 2.8% to 4.2%;
   Nb: 0.20% to 0.80%;
   B: 0.0010% to 0.0050%;
   N: 0.16% to 0.30%;
   Al: 0% to 0.030%;
   O: 0% to 0.030%;
   V: 0% to 0.08%;
   Ti: 0% to 0.08%;
   Ta: 0% to 0.08%;
   Ca: 0% to 0.010%;
   Mg: 0% to 0.010%;
   REM: 0% to 0.080%; and
   a remainder of Fe and impurities,
   wherein Expression (1) is satisfied,

$$0.0012\% \leq [\%S] + [\%Sn] \leq 2.5 \times [\%B] + 0.0125\% \quad (1),$$

   where [%S], [%Sn], and [%B] in Expression (1) represent an S content, an Sn content, and a B content by mass%, respectively.

2. The austenitic heat resisting steel according to claim 1,
   wherein the chemical composition includes one or more selected from the group consisting of:

   V: 0.01% to 0.08%;
   Ti: 0.01% to 0.08%;
   Ta: 0.01% to 0.08%;
   Ca: 0.001% to 0.010%;
   Mg: 0.001% to 0.010%; and
   REM: 0.0005% to 0.080%.

FIG. 1

20°

R1.5

1.5mm

2.5mm

| | INTERNATIONAL SEARCH REPORT | International application No. |
|---|---|---|
| | | PCT/JP2020/029240 |

**A. CLASSIFICATION OF SUBJECT MATTER**
Int.Cl. C21D6/00(2006.01)i, C21D8/02(2006.01)i, C22C38/00(2006.01)i, C22C38/54(2006.01)i
FI: C22C38/00302Z, C22C38/54, C21D6/00102A, C21D8/02D
According to International Patent Classification (IPC) or to both national classification and IPC

**B. FIELDS SEARCHED**

Minimum documentation searched (classification system followed by classification symbols)
Int.Cl. C21D6/00, C21D8/02, C22C38/00, C22C38/54

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2009-084606 A (SUMITOMO METAL INDUSTRIES, LTD.) 23.04.2009 (2009-04-23), paragraphs [0049], [0093]-[0109], tables 1, 2 | 1-2 |
| A | WO 2017/119415 A1 (NIPPON STEEL & SUMITOMO METAL CORPORATION) 13.07.2017 (2017-07-13), paragraphs [0023]-[0026], [0075]-[0093], tables 1, 2 | 1-2 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16.09.2020 | 29.09.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT | International application No. |
|---|---|
| Information on patent family members | PCT/JP2020/029240 |

```
JP 2009-084606 A    23.04.2009    (Family: none)

WO 2017/119415 A1   13.07.2017    US 2019/0010565 A1
                                  paragraphs [0027]-[0030], [0098]-[0114]
                                  tables 1, 2
                                  EP 3401415 A1
                                  CA 3009770 A1
                                  CN 108474072 A
                                  KR 10-2018-0095640 A
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019156592 A
- JP 2002537486 A
- JP 2004250783 A
- JP 2009084606 A
- WO 2009044796 A